# EUROPEAN PATENT APPLICATION

(11) **EP 4 611 206 A1**
(43) Date of publication of application: **03.09.2025**
(21) Application number: 24160824.9
(22) Date of filing: 01.03.2024
(51) Int. Cl.: H02J 3/36, H02J 1/10, H02J 3/38

(54) **DIRECT CURRENT TRANSMISSION AND DISTRIBUTION NETWORK AND GALVANICALLY ISOLATED CONNECTED ELECTROLYSIS PLANT**

(71) Applicant: Siemens Energy Global GmbH & Co. KG, 81739 München (DE)
(72) Inventor: Langenberg, Nils, 90461 Nürnberg (DE); Schumann, Sven, 91452 Wilhermsdorf (DE); Bendig, Marvin, 90513 Zirndorf (DE); Craciun, Bogdan, 91052 Erlangen (DE); Geck, Ulf-André, 91074 Herzogenaurach (DE)

(57) **Abstract**

A direct current transmission and distribution network (100) comprises a plurality of DC-based network units (102) comprising a set of direct current loads (104) and a set of DC power supplies (106), and a direct current link (108) connects the DC-based network units (102). The DC-based network units (102) are connected to the direct current link (108) via their bidirectional galvanically isolated DC-DC converters (110).

## Description

The present disclosure in general relates to the transmission and distribution of electrical energy to high power consumers requiring direct current (DC). More particularly, the present disclosure relates to a direct current transmission and distribution network and an electrolysis plant.

For the production of green hydrogen, electrical energy from renewable energy sources (RES) is a prerequisite. In this context, the overall systemic combination of renewable energy sources and hydrogen electrolysers is of central importance. The required voltage and current form for the operation of electrolysis plants, i.e., hydrogen production plants using electrolysis, i.e., a process of using electricity to split water into hydrogen and oxygen, is direct current (DC), which renewable energy sources, such as wind turbines (or wind farms containing several wind turbines) or photovoltaic systems, oftentimes inherently already provide.

Considering the aspired installed capacity of future electrolysis plants in the range of several tens to several hundreds of Mega-Watt (MW), a parallel operation of multiple individual electrolysis systems (which nowadays are operated in the range of a few hundred kW up to several tens of MW) is necessary. In order to set up large-scale electrolysis plants, multiple, e.g., several dozens or hundreds or even more, electrolysis systems are connected in parallel (which should preferably be selectively connectable to the power supply to enable partial load operation). Each of the electrolysis systems contains one or more rows of electrolyser units wherein the hydrogen generation takes place.

However, electrolysis systems currently receive electric power usually from a connection to an alternating current (AC) power grid as transmission and distribution network for electrical energy, and generate the required direct current (DC) using AC-DC converter systems. Hence, currently RES systems and large-scale DC-based loads, such as electrolysis plants, are interconnected using multiple conversions of the voltage form (DC (generation) - AC (distribution) - DC (load)). Each of these conversion stages introduces losses to the overall distribution and thus decreases the overall system efficiency and leads to increased costs. The number of conversion stages should therefore be limited to a necessary minimum. In addition, the power electronic AC-DC converters used to supply the electrolyser units produce current and consequently voltage distortions that are fed back into the AC power grid. Since the power supply of electrolysis is based on power electronic (PE) switches, these contort the power quality at the connection point to the overlying grid.

Instead of relying on the AC power grid, direct current can be transmitted directly from renewable energy source systems or other DC current sources to DC loads such as electrolysis plants. In WO 2019/246433 A1, a multi-stage DC power distribution system is described that consists of a low-voltage DC link to directly connect electrolysis plants and other DC loads with renewable energy source systems, wherein the DC link is also connected to the AC power grid. However, the system does not effectively decouple the loads from the overlying point of common coupling, i.e., the connection to the AC power grid, and therefore voltage distortions can be fed back into the grid.

It is an objective of the present invention to provide a cost-effective possibility for supplying high-power DC loads such as electrolysis plants with DC current provided by DC supplies such as renewable energy source systems, which better takes into account the number of conversions, the cost of power distribution, grid repercussions, and also enables a partial load operation of the electrolysis systems.

This objective is solved by a direct current transmission and distribution network as stated in claim 1 and an electrolysis plant as stated in claim 15. Advantageous additional embodiments of the invention are disclosed in the respective dependent claims.

According to a first aspect of the invention, a direct current transmission and distribution network comprises a plurality of DC-based network units comprising a set of direct current loads and a set of DC power supplies, and a direct current link connecting the DC-based network units, wherein the DC-based network units are connected to the direct current link via their bidirectional galvanically isolated DC-DC converters.

A DC-based network unit is any network unit or -entity that produces or consumes direct current and is connected to the direct current link, which is a DC bus comprising one or more transmission lines for transmitting DC current between the network units.

A set of direct current loads comprises one or more, potentially many more, direct current loads. As an example, depending on its connection interface to the direct current link, an electrolysis plant may be considered one single DC load or more than one DC loads (if each of the parallel electrolysis systems of the electrolysis plant connects to the DC link individually).

Galvanic isolation prevents DC and unwanted AC currents between two sections of an electrical system while still allowing power transfer between the sections, e.g., by capacitive or inductive means, but without an electrically conductive path. For example, a transformer is a galvanically isolated AC-AC converter.

The galvanically isolated DC-DC converters effectively decouple the DC-based network units from each other and from any overlying point of common coupling to an AC power grid. The converters are bidirectional galvanically isolated DC-DC converters, i.e., the galvanic isolation works in both directions. A DC-based network unit is thereby protected against adverse influences received over the DC link and at the same time will not impose detrimental effects on the DC link and connected units. The galvanically isolated DC-DC converters enable, for example, the decoupling of non-linear DC loads such as electrolysis systems from an overlying AC power grid and from the DC link. This significantly enhances the power quality at a point of common coupling to an AC power grid, because, e.g., harmonics generated by switches of power converters used by the electrolysis systems are not distributed back into the DC link and the point of coupling to the AC power grid. The galvanic isolation also prevents circular currents between parallel electrolysis systems, which could otherwise cause additional losses and increase corrosion and ageing of the process side, i.e., the rows of electrolysis cells of the electrolysis systems, and significantly increases the safety of the electrolysis plant in case of a fault.

Further, the galvanically isolated DC-DC converters allow to connect DC-based network units working at different and changing voltage levels, since the DC-DC converters are configured to adapt input- and output-voltage levels to the same voltage level defined by the operating voltage level of the DC-link.

In an embodiment, the DC-DC converters are controllable, e.g., by a controller unit of the DC transmission and distribution network, at least to actively enable and disable a power transmission between the DC link and an individual DC based network unit, e. g. an electrolyser system of an electrolysis plant. The bidirectional galvanically-isolated DC-DC converters enable a high flexibility both in control strategies and in direction of power flow. In this regard, the DC-DC converters can, for example, individually switch on and off single electrolysis units and may also be able to fine-tune a partial load operation of the electrolysis units. With such, a fluctuating power infeed into the DC link, e.g., from renewable energy source systems, can be handled and the operation point of an electrolysis plant connected to the DC link can be adapted. This operational degree of freedom also has significant importance for an overall plant safety, since if otherwise a single electrolysis unit falls below a critical threshold value of the power input, the hydrogen gas concentration on the oxygen side could rise to an unacceptable high level, even increasing a risk of explosion.

In an embodiment, the galvanically isolated DC-DC converters comprise a DC to AC conversion module connected to a transformer module connected to an AC to DC conversion module. By means of this modular design, operation voltages as well as currents can be individually tuned to the specifications of the connected network unit and the DC link independently from each other.

In a preferred embodiment of the direct current transmission and distribution network, the direct current link is a medium voltage direct current (MVDC) link. Medium voltage (MV) is the DC voltage range between 1 kV and 45 kV. The high-power MVDC link is operated, for example, at or above a voltage of 1.5 kV. Through the operation at higher voltage levels instead of using a low voltage DC link, the operating current and thus the distribution losses can be reduced. Accordingly, any necessary cooling can be reduced and the overall efficiency is increased. An MVDC link enables cost-optimized high-power distribution of DC current and is, therefore, e.g., particularly suitable to supply multi-Megawatt electrolysis plants. The usage of bidirectional galvanically isolated DC-DC converters for connection to the MVDC link ensures that the MVDC link voltage cannot occur in the connected DC-based network units due to a fault. It is, therefore, for example, not necessary in a connected electrolysis system to apply a sufficiently rated MVDC circuit breaker. Furthermore, this approach enables the operation voltage of the MVDC link to be in a cost optimized range, independent of the operation voltages of the connected network units, such as connected electrolysis systems.

In an embodiment of the direct current transmission and distribution network, the set of direct current loads comprises a first electrolysis system having at least one electrolyser row, i.e., one row of electrolyser units, electrolysis cells where the hydrogen generation takes place.

However, an electrolysis plant may contain multiple parallel electrolysis systems. In an example embodiment, the set of direct current loads comprises at least a second electrolysis system having at least one electrolyser row. Multiple electrolysis systems can be controlled individually and, e.g., enable partial load operation. By using several electrolysis rows, which are individually connected to the system via DC-DC converters, a low load operation can be optimally utilized without falling below the operation limits in individual electrolyser units.

In a preferred embodiment of the direct current transmission and distribution network, the set of DC power supplies comprises at least one renewable energy source (RES) system. RES systems may provide direct current, but depending on, e.g., weather conditions or daytime, at variable voltage levels. A power infeed into the DC link is possible, anyway, that can be used to supply the connected DC loads, such as electrolysis systems, or store it in a connected Battery Energy Storage System (BESS) or to feed power back into an overlying AC grid.

In an example embodiment, the set of DC power supplies comprises a wind farm having one or more wind turbines, as a renewable energy source system. In a preferred example embodiment, the DC link is a MVDC link that connects one or more on- and/or offshore wind farms directly to one or more electrolysis plants. The described embodiment of the direct current transmission and distribution network may at least in one operation mode form an islanded grid, i.e., without any or without enabled connection to any overlying AC grid.

In another example embodiment of the direct current transmission and distribution network, the set of DC power supplies comprises a photovoltaic system as a renewable energy source system. With the application of the galvanically isolated DC-DC converters, which can be used to control the power infeed into the DC link as well as to switch off individual photovoltaic systems in case of faults, the photovoltaic systems, which typically operate at lower voltages, can be connected to the DC link, even if the DC link operates in another voltage range, particularly in the medium voltage range.

In an embodiment, the direct current transmission and distribution network comprises a bidirectional AC-DC converter module connected to an AC power grid. In an example embodiment, the AC-DC converter module is a Modular Multilevel Converter (MMC). In other words, the connection of the DC link to an overlying AC power grid is managed by means of a high-power bidirectional AC-DC converter, which may, for example, be an MMC, particularly suitable for connection to an MVDC link. The bidirectional AC-DC converter module enables power infeed from the AC power grid into the DC Link, and also power back-feed from the DC link into the overlying AC power grid.

In an example embodiment, the AC-DC converter module is configured to provide electrical power to the direct current link only if an electrical power demand of the set of direct current loads connected to the direct current link currently exceeds a provision of electrical power by the set of DC power supplies connected to the direct current link. In other words, the provision of electrical power into the DC link by connected DC power supplies is given preference over electrical power provided from the AC power grid. Therefore, electrical power provided by connected renewable energy source systems such as wind turbines or photovoltaic systems, which are dependent on current environmental conditions, will be used more efficiently when available, while being substituted by power from the AC power grid only if required to ensure that all power demands by the connected DC loads can be met at any time. For example, in the case, that RES systems are connected and are feeding power into the DC link, which is however lower than the power demand from electrolysis units connected to the DC link, the AC-DC converter module supplies the necessary power delta to the DC link. In the case, that the power fed in by the RES systems exceeds the power demand from the electrolysis units, no active power is transferred from the overlying AC power grid to the DC link. In an example embodiment, in this case, the direction of power flow is reversed and surplus active power can be fed into the overlying AC power grid.

In another example embodiment, the AC-DC converter module is configured to operate in a grid forming mode at least when it does not provide electrical power to the direct current link. In this mode, the AC-DC converter provides grid services to the AC power grid. In particular, in this mode the AC-DC converter is configured to provide static synchronous compensator (STATCOM) functionality. STATCOM functionality comprises providing flexible reactive power to the AC power grid and its network units, i.e., its connected entities (such as power plants and consumers). Further, the converter in STATCOM mode may provide active filtering capabilities. The STATCOM device may filter harmonics present in the AC power grid created by nearby consumers, for example, thyristor-based power supplies of neighbouring electrolysis systems connected to the AC power grid. These features are particularly advantageous when connecting to weak networks.

In an embodiment of the direct current transmission and distribution network, the plurality of DC-based network units comprises at least one Battery Energy Storage System (BESS). The DC-DC converters used to connect the Battery Energy Storage Systems to the DC link control power in- and outflow of the BESS. These converters can also control the DC link voltage, for example if no AC-DC converter connects the DC link to an AC power grid or if the AC-DC converter is operating in grid forming mode towards the AC power grid side. Depending on the current direction of power flow in or out of the BESS, it may be considered a temporary DC power supply or a temporary DC-based load.

With no AC-DC converter for connection to an AC power grid being present or the AC-DC converter being present but operated in grid forming mode for the AC power grid, the DC transmission and distribution network may operate in an island mode, with DC power infeed by RES systems, and in a preferred embodiment with one or more BESS systems configured to control and stabilise the voltage on the DC link. This scenario is particularly valid for offshore wind-farms or remote onshore wind- and photovoltaic farms, e.g., connected to supply large scale DC-based loads such as an electrolysis plant with DC current.

In an example embodiment of the direct current transmission and distribution network, the direct current link has a length between 1 and 30 kilometres (km), for example between 20 and 25 km. The DC link may be shorter than 1 km, e.g., between 10 m and 100 m or between 100 m and 1 km. Although the DC link may be longer than 30 km, a feasible length may depend on the transmission losses of the available connection.

According to a second aspect of the invention, an electrolysis plant comprises one or more electrolysis systems, each comprising at least one electrolyser row, wherein the electrolysis plant comprises one or more bidirectional galvanically isolated DC-DC converters configured to connect the one or more electrolysis systems to receive electrical power from a medium voltage direct current link.

In an embodiment of the electrolysis plant, the one or more galvanically isolated DC-DC converters comprise a DC to AC conversion module connected to a transformer module connected to an AC to DC conversion module.

In a preferred embodiment, the electrolysis plant is configured to be used as part of a direct current transmission and distribution network according to the first aspect of the invention.

In this way, the advantages and special features of the direct current transmission and distribution network according to the invention are also implemented within the framework of a suitably equipped electrolysis plant.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates an example of a direct current transmission and distribution network according to an embodiment of the invention; and
- Fig. 2: schematically illustrates an example of an electrolysis plant according to another embodiment of the invention.

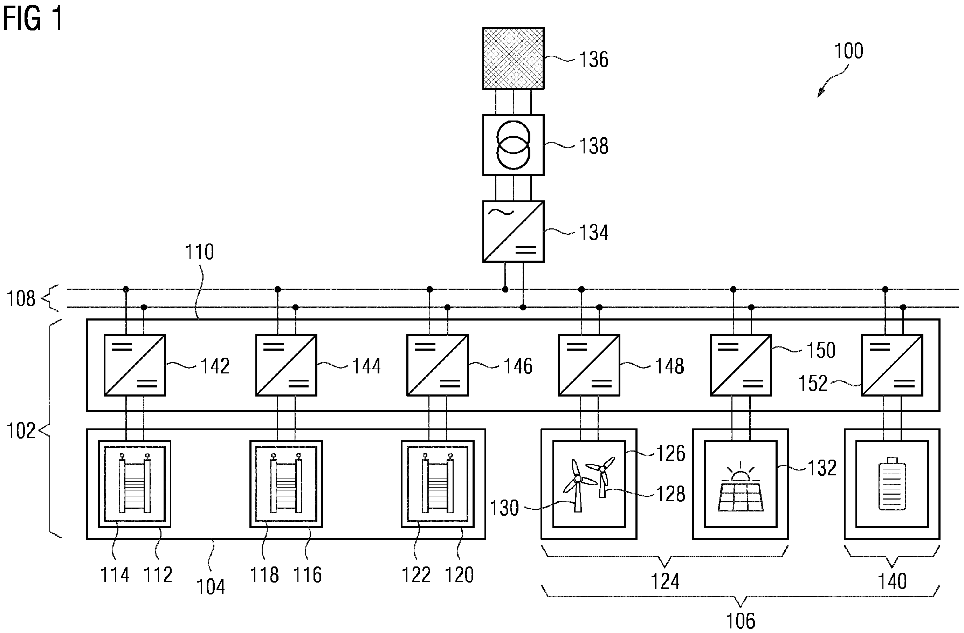

In Fig. 1, an example of a direct current transmission and distribution network 100 according to an embodiment of the invention is schematically illustrated. The DC transmission and distribution network 100 comprises a plurality of DC-based network units 102. The plurality comprises different types of network units. It comprises a set of direct current loads 104 and a set of direct current (DC) power supplies 106. A direct current link 108 connects the DC-based network units 102 for transmission of DC current and enables distribution of DC current from the DC power supplies to the DC loads. The DC-based network units 102 are connected to the DC link 108 via their bidirectional galvanically isolated DC-DC converters 110. The galvanically isolated DC-DC converters 110 are controllable to enable and disable a power transmission between the DC link 108 and an individual DC-based network unit. The converters may be controlled by the corresponding network unit individually. In another embodiment, a DC network controller (not shown) provides centralized control.

In the shown embodiment, the direct current link 108 is a medium voltage direct current (MVDC) link that provides direct current to an electrolysis plant which consists of multiple parallel electrolysis systems, wherein each electrolysis system contains a single electrolyser row and each electrolysis system is connected separately to the DC link via individual bidirectional galvanically isolated DC-DC converters 142, 144, 146, thereby enabling easy partial load operation by controlling the DC-DC converters 142, 144, 146. In Fig. 1, three electrolysis systems of the electrolysis plant are shown: a first electrolysis system 112 having one electrolyser row 114, a second electrolysis system 116 having one electrolyser row 118, and a third electrolysis system 120 having one electrolyser row 122.

The DC current is provided to the DC link 108, which is a high power MVDC link, by renewable energy source systems 124. In Fig. 1, the renewable energy is generated by a wind farm 126 connected to the DC link 108 via DC-DC converter 148. The wind farm 126 consists of multiple wind turbines 128, 130. Further direct current can be provided to the DC link 108 via DC-DC converter 150 by a photovoltaic system 132 as another renewable energy source system 124.

Further, the MVDC link is connected to an AC power grid 136 via a bidirectional AC-DC converter module 134 and a high voltage or medium voltage transformer module 138 (depending on the voltage level of the AC power grid) that provides, e.g., galvanic isolation between the grid and the MVDC link.

The shown AC-DC converter module 134 provides electrical power to the DC link 108, which is an MVDC link, only if an electrical power demand of the electrolysis systems 112, 116, 120 currently exceeds the provision of electrical power by the DC power supplies, i.e., the wind farm 126 and the photovoltaic system 132 connected to the direct current link 108, and otherwise operates in a grid forming mode.

Additionally, the DC transmission and distribution network 100 contains a Battery Energy Storage System 140 that is connected to the DC link 108 via its bidirectional galvanically isolated DC-DC converter system 152, which can be considered a DC supply or DC load, depending on the direction of power flow in or out of the battery.

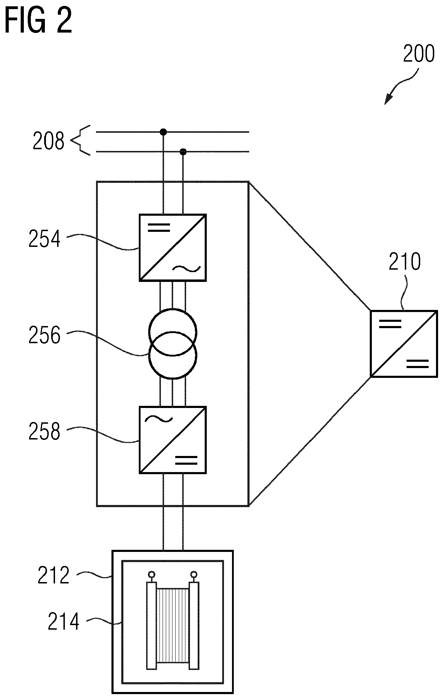

In Fig. 2, an example of an electrolysis plant 200 according to another embodiment of the invention is schematically shown. An electrolysis plant usually contains multiple parallel electrolysis systems. However, the electrolysis plant 200 shown in Fig. 2 is shown with one electrolysis system 212 with one electrolyser row 214. The electrolysis plant further contains a bidirectional galvanically isolated DC-DC converter 210 that connects the electrolysis system 212 to receive electrical power from a MVDC link 208. The DC-DC converter 210 enables galvanic isolation between the electrolysis system 212 and the MVDC link 208 by a sequence of power conversion modules comprising a DC to AC conversion module 254 connected to a medium frequency transformer module 256 that is connected to an AC to DC conversion module 258. The shown MVDC link 208 may, for example, correspond to the MVDC link 108 shown in Fig. 1 and the electrolysis plant 200 could be connected to the MVDC link as part of the DC transmission and distribution network 100 shown in Fig. 1.

Those skilled in the art will recognize that the boundaries between blocks are merely illustrative and that alternative embodiments may merge blocks or impose an alternative composition of functionality upon various blocks.

Although the invention has been illustrated and described in detail by the shown preferred embodiments, the invention is not limited by the disclosed examples and other variations can be derived therefrom by those skilled in the art without departing from the scope of the invention.

As described above, the invention provides several advantages, which comprise for example
- High utilization factor and thus low costs for high-power distribution
- High overall efficiency
- High power levels can be achieved
- Wide range of ancillary grid services are enabled
- Combination of equipment of differing voltage levels on the same DC link possible
- Island-grid operation is enabled
- Fine control in partial load operation of multiple parallel connected electrolysis plants
- High security of electrolysis systems and no adaptations for possible MVDC voltage occurrences in electrolysis plant required
- Low footprint of power supply.

In summary, a direct current transmission and distribution network 100 comprises a plurality of DC-based network units 102 comprising a set of direct current loads 104 and a set of DC power supplies 106, and a direct current link 108 connects the DC-based network units 102. The DC-based network units 102 are connected to the direct current link 108 via their bidirectional galvanically isolated DC-DC converters 110.

The set of DC-based current loads may, for example, correspond to an electrolysis plant, the set of DC power supplies may correspond to one or more renewable energy source systems and the DC link may be operated as a medium voltage DC link.

Further, an electrolysis plant 200 is provided that is suitable for connection to the DC link using one or more bidirectional galvanically isolated DC-DC converters 210.

## Claims

1. Direct current transmission and distribution network (100), comprising
a plurality of DC-based network units (102) comprising a set of direct current loads (104) and a set of DC power supplies (106); and
a direct current link (108) connecting the DC-based network units (102); **characterized in that**
the DC-based network units (102) are connected to the direct current link (108) via their bidirectional galvanically isolated DC-DC converters (110).

2. The direct current transmission and distribution network as claimed in claim 1, wherein the galvanically isolated DC-DC converters (110) are controllable at least to enable and disable a power transmission between the DC link (108) and an individual DC-based network unit.

3. The direct current transmission and distribution network as claimed in claim 1 or claim 2, wherein the galvanically isolated DC-DC converters (110) comprise a DC to AC conversion module connected to a transformer module connected to an AC to DC conversion module.

4. The direct current transmission and distribution network as claimed in any of the preceding claims, wherein the direct current link (108) is a medium voltage direct current link.

5. The direct current transmission and distribution network as claimed in any of the preceding claims, wherein the set of direct current loads (104) comprises a first electrolysis system (112) having at least one electrolyser row (114).

6. The direct current transmission and distribution network as claimed in claim 5, wherein the set of direct current loads (104) comprises at least a second electrolysis system (116) having at least one electrolyser row (118).

7. The direct current transmission and distribution network as claimed in any of the preceding claims, wherein the set of DC power supplies (106) comprises at least one renewable energy source system (124).

8. The direct current transmission and distribution network as claimed in claim 7, wherein the set of DC power supplies (106) comprises a wind farm (126) having one or more wind turbines (128, 130), as a renewable energy source system.

9. The direct current transmission and distribution network as claimed in claim 7 or claim 8, wherein the set of DC power supplies (106) comprises a photovoltaic system (132), as a renewable energy source system.

10. The direct current transmission and distribution network as claimed in any of the preceding claims, further comprising a bidirectional AC-DC converter module (134) connected to an AC power grid (136).

11. The direct current transmission and distribution network as claimed in claim 10, wherein the AC-DC converter module (134) is configured to provide electrical power to the direct current link (108) only if an electrical power demand of the set of direct current loads (104) connected to the direct current link (108) currently exceeds a provision of electrical power by the set of DC power supplies (106) connected to the direct current link (108).

12. The direct current transmission and distribution network as claimed in claim 10 or claim 11, wherein the AC-DC converter module (134) is configured to operate in a grid forming mode at least when it does not provide electrical power to the direct current link (108).

13. The direct current transmission and distribution network as claimed in any of the preceding claims, wherein the plurality of DC-based network units (102) comprises at least one Battery Energy Storage System (140).

14. The direct current transmission and distribution network as claimed in any of the preceding claims, wherein the direct current link (108) has a length between 1 and 30 kilometres.

15. Electrolysis plant (200), comprising
one or more electrolysis systems (212), each comprising at least one electrolyser row (214), **characterized in that**
the electrolysis plant (200) comprises one or more bidirectional galvanically isolated DC-DC converters (210) configured to connect the one or more electrolysis systems (212) to receive electrical power from a medium voltage direct current link (208).

16. The electrolysis plant as claimed in claim 15, wherein the one or more galvanically isolated DC-DC converters (210) comprise a DC to AC conversion module (254) connected to a transformer module (256) connected to an AC to DC conversion module (246).

17. The electrolysis plant as claimed in claim 15 or claim 16, configured to be used as part of a direct current transmission and distribution network (100) as claimed in any of the claims 1 to 14.
